# EUROPEAN PATENT APPLICATION

(11) **EP 2 173 045 A1**
(43) Date of publication of application: **07.04.2010**
(21) Application number: 07767829.0
(22) Date of filing: 28.06.2007
(51) Int. Cl.: H04J 11/00, H04L 27/01

(54) **TRANSMITTER, TRANSMITTING METHOD, RECEIVER, AND RECEIVING METHOD**

(71) Applicant: Panasonic Corporation, Kadoma-shi Osaka 571-8501 (JP)
(72) Inventor: SEKI, Yuta c/o Panasonic Corp., IPROC, 2-1-61 Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/063036
(87) International publication number: WO 2009/001465

(57) **Abstract**

A transmitter which alleviates the effect of delayed waves without reducing the transmission efficiency to prevent degradation in overall throughput. In the transmitter for transmitting the SC-FDMA signals, a data realignment section (130) assigns a signal with better error characteristics or a signal requiring no high error characteristics toward the end of a symbol length of the SC-FDMA signal to obtain a time-region signal, and a time/frequency converter section (140) forms the SC-FDMA signal using the time-region signal. This allows the signal to be realigned by selecting the symbol end subject to the effect of delayed waves and the symbol center less subject to the effect of delayed waves out of the SC-FDMA symbol length. As a result, the influence of an error at the symbol end subject to the effect of delayed waves on the overall packet is reduced to prevent degradation in overall throughput.

## Description

### Technical Field

The present invention relates to a transmitting apparatus, transmission method, receiving apparatus and reception method used in a single carrier communication scheme.

### Background Art

In recent years, in mobile communication, and, in particular, in uplink radio access from a mobile station to a base station, single carrier transmission has been a focus of attention.

The standards organization 3GPP (3rd Generation Partnership Project) is studying 3GPP LTE (Long Term Evolution) aiming at the realization of a further improved system for current third-generation mobile telephones.

An SC-FDMA (Single Carrier Frequency Division Multiple Access) scheme is adopted as an uplink communication scheme in an LTE system (see Non-Patent Document 1 and Non-Patent Document 2).

Non-Patent Document 2 discloses a method of forming an SC-FDMA symbol by performing a DFT (Discrete Fourier Transform) on a primary modulation symbol sequence, performing pulse shaping filter processing in the frequency domain (however, pulse shaping filter processing is optional and not essential), performing subcarrier mapping and performing an IFFT (Inverse Fast Fourier Transform).

The SC-FDMA scheme disclosed in Non-Patent Document 2 adds a cyclic prefix (CP) to an SC-FDMA symbol to remove the influence of delayed waves, performs time windowing processing to keep the continuity of waveform between SC-FDMA symbols and forms a transmission signal.

An equalizer is generally known as a means f or reducing the influence of delayed waves in a receiving apparatus. Above all, frequency domain equalization technology (Frequency Domain Equalization: FDE) is often used in transmission schemes using

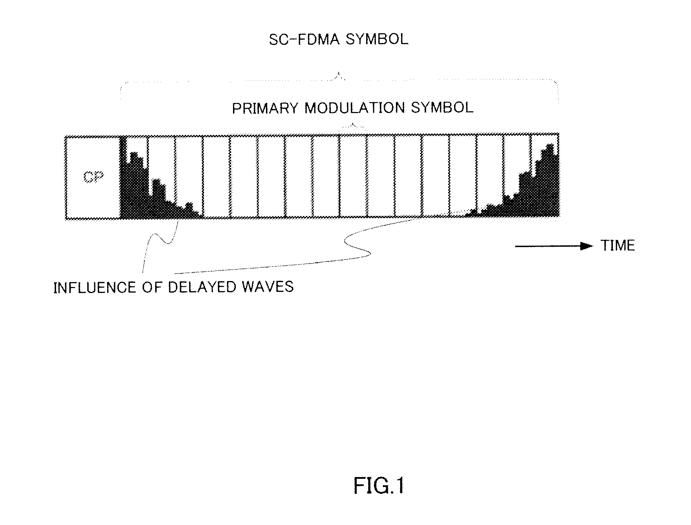

In cases where a delayed wave is present beyond the CP duration, if a receiving apparatus uses frequency equalization, the influence (interference) of the delayed wave appears significant at both ends of the symbol duration of the SC-FDMA symbol. FIG. 1 shows the format of the SC-FDMA signal. The format of the SC-FDMA signal is made up of an SC-FDMA symbol and a CP, as shown in FIG.1. Here, the SC-FDMA symbol duration is the minimum unit time (period) processed by DFT. An SC-FDMA symbol is made up of a plurality of primary modulation symbols. A primary modulation symbol is a symbol by the primary modulation by, for example, QPSK or 16QAM.

In FIG.1, the dark areas show areas affected by delayed waves. That is, the influence of delayed waves appears significant in the vicinities of the front and tail ends of the minimum unit time (i.e. SC-FDMA symbol period) in the time domain, processed by the DFT.

Therefore, when a delayed wave is present beyond the CP duration on a multipath propagation path, the transmission characteristics of the SC-FDMA signal deteriorate significantly. When an error is found in a packet in packet communication, a retransmission occurs. Therefore, when a symbol error is present in a packet due to the influence of delayed waves, overall throughput deteriorates.

One possible solution to this problem is to set the CP length long so as to accommodate delayed waves within the CP duration and prevent the influence of delayed waves.
Non-Patent Document 1: 3GPP, TS25.814, V7.1.0 (2006-09)
Non-Patent Document 2: 3GPP, R1-050702, NTT DoCoMo, NEC, SHARP, "DFT-Spread OFDM with Pulse Shaping Filter in Frequency Domain in Evolved UTRA Uplink"

### Disclosure of Invention

### Problems to be Solved by the Invention

However, increasing the proportion of the CP duration, which is a redundant signal, naturally leads to a decrease in transmission efficiency. Furthermore, since the duration of delay varies depending on the surrounding environment such as reflectors and scattered objects, it is difficult to determine an optimum CP duration.

It is therefore an object of the present invention to provide a transmitting apparatus, transmission method, receiving apparatus and reception method capable of reducing the influence of delayed waves without changing (increasing) the CP duration and preventing overall throughput from deteriorating.

### Means for Solving the Problem

The transmitting apparatus of the present invention is a transmitting apparatus that transmits a single carrier frequency division multiple access signal, the apparatus employing a configuration including: a data rearrangement section that acquires a time domain signal by arranging signals showing good error performance or signals not requiring high error performance closer toward ends of a symbol duration of the single carrier frequency division multiple access signal; and a formation section that forms the single carrier frequency division multiple access signal using the time domain signal acquired in the data rearrangement section.

According to this configuration, it is possible to arrange signals by selecting between symbol ends susceptible to the influence of delayed waves and the symbol center less susceptible to the influence of delayed waves in one symbol duration of the SC-FDMA signal, so that it is possible to reduce the influence of errors at symbol ends susceptible to the influence of delayed waves upon the entirety of packets, and prevent overall throughput from deteriorating.

### Advantageous Effects of Invention

According to the present invention, it is possible to reduce the influence of delayed waves without changing (increasing) the CP duration or deteriorating transmission efficiency, and prevent overall throughput from deteriorating.

### Brief Description of Drawings

FIG.1 illustrates a format of an SC-FDMA signal;
FIG.2 is a block diagram showing a configuration of main components of a transmitting apparatus according to Embodiment 1 of the present invention;
FIG.3 is a block diagram showing a configuration of main components of a receiving apparatus according to Embodiment 1 ;
FIG.4 is a block diagram showing a configuration of main components of a transmitting apparatus according to Embodiment 2 of the present invention;
Fig. 5 is a block diagram showing a configuration of main components of a receiving apparatus according to Embodiment 2;
FIG.6 is a block diagram showing a configuration of main components of a transmitting apparatus according to Embodiment 3 of the present invention;
FIG.7 is a block diagram showing a configuration of main components of a receiving apparatus according to Embodiment 3;
FIG.8 is a block diagram showing a configuration of main components of a transmitting apparatus according to Embodiment 4 of the present invention;
FIG.9 is a block diagram showing a configuration of main components of a receiving apparatus according to Embodiment 4;
FIG.10 is a block diagram showing a configuration of main components of a transmitting apparatus according to Embodiment 5 of the present invention; and
FIG. 11 is a block diagram showing a configuration of main components of a receiving apparatus according to Embodiment 5.

### Best Mode for Carrying Out the Invention

Hereinafter, embodiments of the present invention will be explained in detail with reference to the accompanying drawings.

### (Embodiment 1)

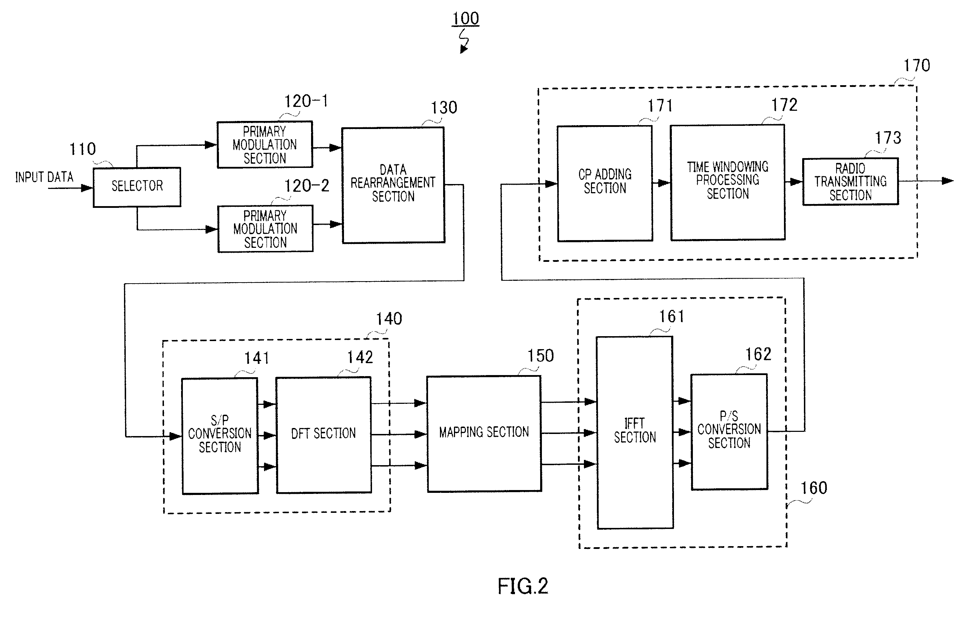

FIG.2 shows a configuration of main components of a transmitting apparatus according to an embodiment of the present invention. Transmitting apparatus 100 shown in FIG.2 is configured including selector section 110, primary modulation sections 120-1 and 120-2, data rearrangement section 130, time-frequency conversion section 140, mapping section 150, frequency-time conversion section 160 and radio processing section 170.

Selector section 110 distributes input data to primary modulation sections 120-1 and 120-2.

Primary modulation sections 120-1 and 120-2, supporting modulation schemes of varying M-ary modulation values, each apply primary modulation to the input data distributed from selector section 110, and output the resulting primary modulated signal to data rearrangement section 130.

Data rearrangement section 130 rearranges the primary modulated signals generated in primary modulation sections 120-1 and 120-2. To be more specific, t ime-frequency conversion section 140 preferentially arranges the primary modulated signal of the lower M-ary modulation value at the ends of the minimum unit time used upon conversion of a time domain signal into a frequency domain signal, and arranges the primary modulated signal of the higher M-ary modulation value in the center of the minimum unit time. The minimum unit time for converting a time domain signal to a frequency domain signal corresponds to one SC-FDMA symbol duration in FIG.1. Hereinafter, this minimum unit time will be referred to as the "SC-FDMA symbol duration" and distinguished from the primary modulation symbol duration.

Time-frequency conversion section 140 is provided with S/P (Serial-to-Parallel) conversion section 141 and DFT (Discrete Fourier Transform) section 142. S/P conversion section 141 converts the time domain signal rearranged in data rearrangement section 130 from serial to parallel per SC-FDMA symbol duration, and outputs parallel signals to DFT section 142. DFT section 142 applies discrete Fourier transform to the serial/parallel-converted time domain signals and outputs the resulting frequency domain signals to mapping section 150.

Mapping section 150 maps the frequency domain signals to a plurality of subcarriers and outputs the mapped frequency domain signals to frequency-time conversion section 160.

Frequency-time conversion section 160 is provided with IFFT (Inverse Fast Fourier Transform) section 161 and P/S (Parallel-to-Serial) conversion section 162, and IFFT section 161 maps "0" to subcarriers other than the subcarriers to which frequency domain signals are mapped by mapping section 150, applies an inverse fast Fourier transform to the frequency domain signals and the frequency domain signals with "0" mapped thereto and outputs the resulting time domain signals to P/S conversion section 162. P/S conversion section 162 converts the time domain signals from parallel to serial, forms an SC-FDMA signal and outputs the SC-FDMA signal formed to radio processing section 170.

Radio processing section 170 is provided with CP (Cyclic Prefix) adding section 171, time windowing processing section 172 and radio transmitting section 173, and CP adding section 171 adds a cyclic prefix (CP) to the time domain SC-FDMA signal and outputs the SC-FDMA signal to time windowing processing section 172. Time windowing processing section 172 applies time windowing processing to the time domain SC-FDMA signal with a CP, and outputs the SC-FDMA signal after the time windowing processing, to radio transmitting section 173. Radio transmitting section 173 applies radio processing such as up-conversion to the SC-FDMA signal after the time windowing processing, and transmits the signal via an antenna.

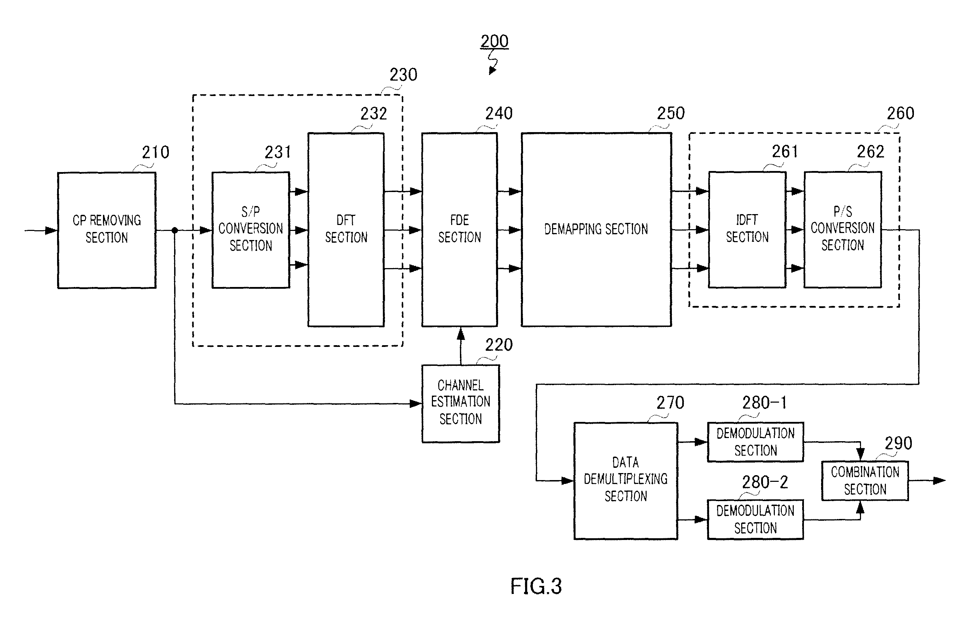

FIG.3 shows a configuration of main components of a receiving apparatus according to an embodiment of the present invention. Receiving apparatus 200 shown in FIG.3 is configured including CP removing section 210, channel estimation section 220, time-frequency conversion section 230, FDE (Frequency Domain Equalization) section 240, demapping section 250, frequency-time conversion section 260, data demultiplexing section 270, demodulation sections 280-1 and 280-2 and combination section 290.

CP removing section 210 removes the CP added to the SC-FDMA signal and outputs the SC-FDMA signal without a CP to channel estimation section 220 and time-frequency conversion section 230.

Channel estimation section 220 performs channel estimation using the SC-FDMA signal without a CP, and outputs the channel estimation result to FDE section 240.

Time-frequency conversion section 230 is provided with S/P conversion section 231 and DFT section 232, and S/P conversion section 231 converts the SC-FDMA signal without a CP from serial to parallel, and outputs the SC-FDMA signals after the serial/parallel conversion to DFT section 232. DFT section 232 applies discrete Fourier transform to the serial/parallel-converted SC-FDMA signals and outputs the resulting frequency domain signals to FDE section 240.

FDE section 240 applies frequency equalization processing to the frequency domain signals using the channel estimation result, and outputs the frequency domain signals after the frequency equalization processing to demapping section 250.

Contrary to the mapping by mapping section 150 of transmitting apparatus 100 of the communicating party, demapping section 250 demaps the frequency domain signals mapped to a plurality of subcarriers in the original frequency band and outputs the demapped frequency domain signals to frequency-time conversion section 260.

Frequency-time conversion section 260 is provided with IDFT (Inverse Discrete Fourier Transform) section 261 and P/S conversion section 262, and IDFT section 261 applies an inverse discrete Fourier transform to the frequency domain signals demapped in the original frequency band by demapping section 250, and outputs the resulting time domain signals to P/S conversion section 262. P/S conversion section 262 converts the time domain signals from parallel to serial, and outputs the resulting time domain signal to data demultiplexing section 270.

Data demultiplexing section 270 demultiplexes the time domain signal into individual primary modulated signals of respective M-ary modulation values based on the rearrangement order in data rearrangement section 130 of transmitting apparatus 100 of the communicating party, and outputs the primary modulated signals to demodulation sections 280-1 and 280-2. To be more specific, data rearrangement section 130 of transmitting apparatus 100 preferentially arranges the primary modulated signal of the lower M-ary modulation value at the ends of the SC-FDMA symbol duration and arranges the primary modulated signal of the higher M-ary modulation value in the center of the SC-FDMA symbol duration, so that data demultiplexing section 270 demultiplexes the primary modulated signals arranged at the ends of the SC-FDMA symbol duration and outputs these primary modulated signals to demodulation section 280-1 corresponding to the modulation scheme of the lower M-ary modulation value, and likewise demultiplexes the primary modulated signal arranged in the center of the SC-FDMA symbol duration and outputs this primary modulated signal to demodulation section 280-2 corresponding to the modulation scheme of the higher M-ary modulation value.

Demodulation sections 280-1 and 280-2 apply demodulation processing to the primary modulated signals outputted from data demultiplexing section 270 and output the resulting demodulated signals to combination section 290.

Combination section 290 combines the demodulated signals outputted from demodulation sections 280-1 and 280-2 and acquires decoded data.

Hereinafter, the operations of transmitting apparatus 100 and receiving apparatus 200 configured as described above will be explained.

First, selector section 110 distributes input data to primary modulation sections 120-1 and 120-2. The distributed input data are modulated by primary modulation sections 120-1 and 120-2 according to the respective supporting modulation schemes. Hereinafter, a case will be described where primary modulation section 120-1 applies 16QAM modulation and primary modulation section 120-2 applies QPSK modulation, as an example. A time domain 16QAM modulated signal and QPSK modulated signal that are generated, are outputted to data rearrangement section 130.

Data rearrangement section 130 rearranges the 16QAM modulated signal and QPSK modulated signal, and generates a time domain signal having one SC-FDMA symbol duration. To be more specific, the primary modulated signal by the modulation scheme ("MS") of the lower M-ary modulation value than the primary modulated signal arranged in the center of the SC-FDMA symbol duration, is arranged at the ends of the SC-FDMA symbol duration. Therefore, the 16QAM modulated signal is arranged in the center of the SC-FDMA symbol duration and the QPSK modulated signal is arranged at the ends of the SC-FDMA symbol duration. Generally speaking, MS's of smaller M-ary modulation values are more robust to errors, so that, by arranging primary modulated signals of smaller M-ary modulation values closer to the ends of the SC-FDMA symbol duration, it is possible to make primary modulated signals at the ends of the SC-FDMA symbol duration more robust to errors, and improve transmission performance.

Afterward, the time domain signal in which the sequence order has been rearranged within one SC-FDMA symbol duration in data rearrangement section 130, is converted into frequency domain signals in time-frequency conversion section 140. The frequency domain signals are then mapped to a plurality of subcarriers in mapping section 150. The mapped frequency domain signals are converted to a time domain signal in frequency-time conversion section 160, thereby forming an SC-FDMA signal.

The SC-FDMA signal is subjected to CP addition, time windowing processing and radio processing by radio processing section 170, and then transmitted via an antenna (not shown).

CP removing section 210 of receiving apparatus 200 removes the CP added to the SC-FDMA signal received via an antenna (not shown), and time-frequency conversion section 230 converts the SC-FDMA signal to frequency domain signals. FDE section 240 applies frequency equalization processing to the frequency domain signals using a channel estimation result estimated in channel estimation section 220.

Demapping section 250 demaps the frequency domain signals after the frequency equalization processing to the original frequency band, and frequency-time conversion section 260 converts the demapped frequency domain signals into a time domain signal.

Data demultiplexing section 270 demultiplexes the time domain signal per modulation scheme, based on the rearrangement order in data rearrangement section 130 of transmitting apparatus 100 of the communicating party, demodulation sections 280-1 and 280-2 apply demodulation processing to the demultiplexed primary modulated signals, and combination section 290 combines the demodulated signals, thereby providing decoded data.

As described above, according to the present embodiment, data rearrangement section 130 arranges signals of a lower M-ary modulation value closer toward the ends of the SC-FDMA symbol duration. This improves error robustness at the ends of the SC-FDMA symbol duration, which are generally susceptible to the influence of delayed waves, so that it is possible to reduce the influence of errors at the ends of the symbol duration susceptible to the influence of delayed waves upon the entirety of packets, and prevent overall throughput from deteriorating.

In the above explanations, transmitting apparatus 100 is provided with two primary modulation sections 120-1 and 120-2 so as to generate primary modulated signals of different M-ary modulation values, but the present invention is not limited to this, and transmitting apparatus 100 may be adapted to be provided with three or more primary modulation sections so that data rearrangement section 130 preferentially assigns primary modulated signals of smaller M-ary modulation values closer toward the ends of the SC-FDMA symbol duration.

### (Embodiment 2)

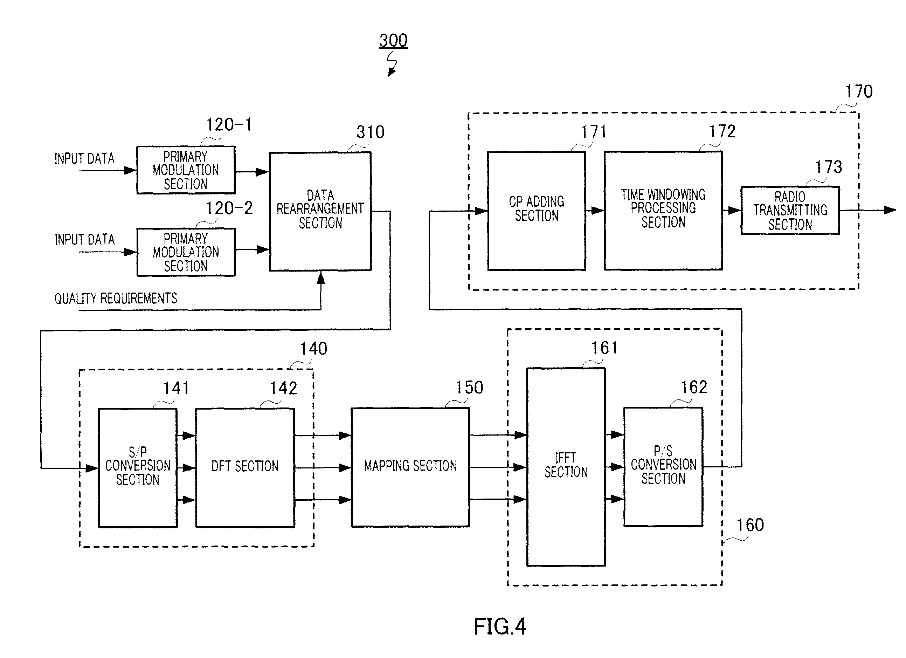

FIG.4 is a block diagram showing a configuration of main components of transmitting apparatus 300 according to an embodiment of the present invention. In the explanations of the present embodiment, the same components as in FIG.2 will be assigned the same reference numerals and explanations thereof will be omitted.

The present embodiment is different from Embodiment 1 in that transmitting apparatus 300 in FIG.4 eliminates selector section 110 and is provided with data rearrangement section 310 instead of data rearrangement section 130.

Data rearrangement section 310 rearranges the primary modulated signals generated in primary modulation sections 120-1 and 120-2 according to the quality requirements for input data inputted in primary modulation sections 120-1 and 120-2, and generates a time domain signal of one SC-FDMA symbol duration.

To be more specific, data rearrangement section 310 preferentially assigns the primary modulated signal corresponding to the input data requiring the lower quality to the ends of the SC-FDMA symbol duration. Thus, by assigning input data to require low quality to the ends of the SC-FDMA symbol duration susceptible to the influence of delayed waves and assigning input data to require high quality to the center of the SC-FDMA symbol duration less susceptible to the influence of delayed waves, it is possible, even when errors occur at symbol ends susceptible to the influence of delayed waves, to minimize the influence of errors at symbol ends susceptible to the influence of delayed waves upon overall packet quality.

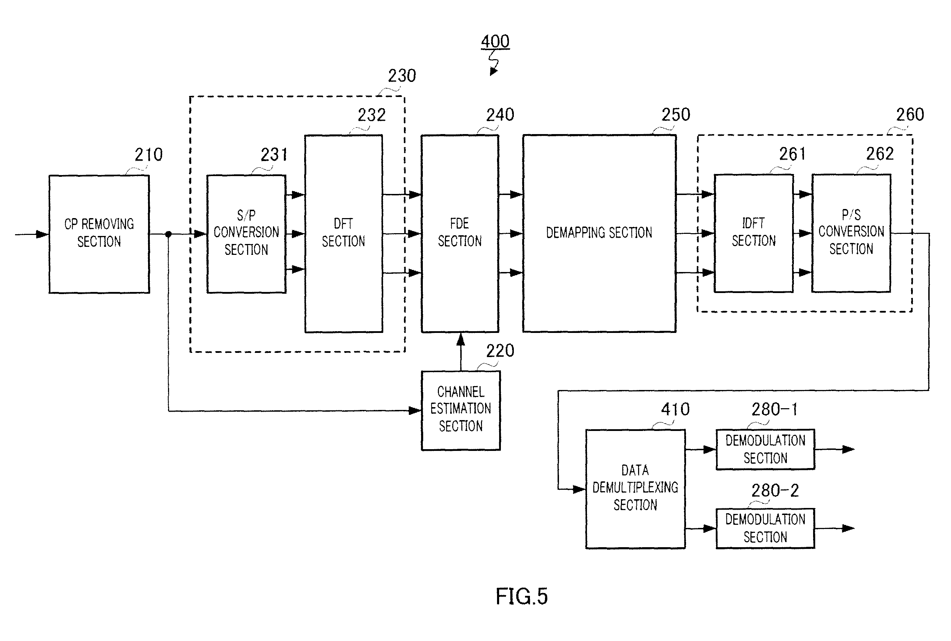

FIG.5 is a block diagram showing a configuration of main components of receiving apparatus 400 according to an embodiment of the present invention. In the explanations of the present embodiment, the same components as in FIG.3 will be assigned the same reference numerals and explanations thereof will be omitted.

The present embodiment is different from Embodiment 1 in that receiving apparatus 400 in FIG.5 eliminates combination section 290 and is provided with data demultiplexing section 410 instead of data demultiplexing section 270.

Data demultiplexing section 410 demultiplexes a time domain signal based on the rearrangement order in data rearrangement section 310 of transmitting apparatus 300 of the communicating party, and outputs the demultiplexed time domain signals to demodulation sections 280-1 and 280-2. To be more specific, data rearrangement section 310 of transmitting apparatus 300 preferentially arranges the primary modulated signal requiring the lower quality to the ends of the SC-FDMA symbol duration and arranges the primary modulated signal requiring the higher quality at the center of the SC-FDMA symbol duration, so that data demultiplexing section 410 demultiplexes the primary modulated signals arranged at the ends of the SC-FDMA symbol duration and outputs these demultiplexed signals to corresponding demodulation section 280-1, and likewise demultiplexes the primary modulated signal arranged at the center of the SC-FDMA symbol duration and outputs this demultiplexed signal to corresponding demodulation section 280-2.

As described above, according to the present embodiment, data rearrangement section 310 assigns signals to require lower quality closer toward the ends of the SC-FDMA signal symbol duration. Thus, primary modulated signals to require low quality are arranged at the ends of the SC-FDMA symbol duration susceptible to the influence of delayed waves, so that, even when errors occur at symbol ends susceptible to the influence of delayed waves, it is possible to minimize the influence of errors at symbol ends susceptible to the influence of delayed waves upon overall packet quality.

### (Embodiment 3)

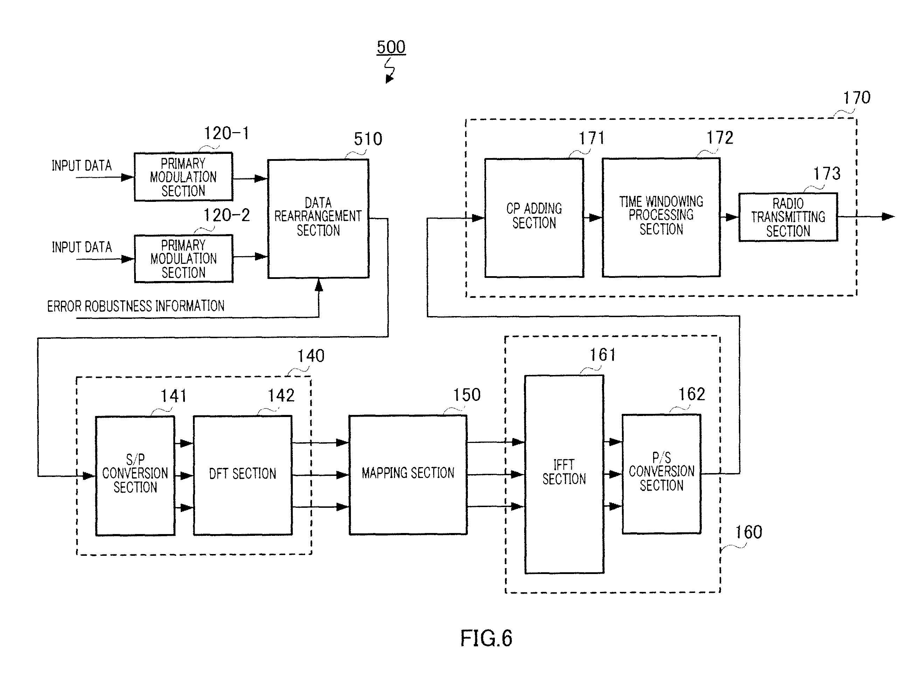

FIG.6 is a block diagram showing a configuration of main components of transmitting apparatus 500 according to an embodiment of the present invention. In the explanations of the present embodiment, the same components as in FIG.2 will be assigned the same reference numerals and explanations thereof will be omitted.

The present invention is different from Embodiment 1 in that transmitting apparatus 500 in FIG.6 eliminates selector section 110 and is provided with data rearrangement section 510 instead of data rearrangement section 130.

Data rearrangement section 510 rearranges the primary modulated signals generated in primary modulation sections 120-1 and 120-2 according to the radio transmission characteristics of the primary modulated signals, and generates a time domain signal of one SC-FDMA symbol duration.

To be more specific, data rearrangement section 510 preferentially assigns the primary modulated signal of the more robust radio transmission characteristics, to the ends of the SC-FDMA symbol duration. By this means, primary modulated signals of robust radio transmission characteristics are assigned to the ends of the SC-FDMA symbol duration, which are susceptible to the influence of delayed waves, and modulated signals of low error robustness are assigned to the center of the SC-FDMA symbol duration, which is less susceptible to the influence of delayed waves, so that it is possible to make the primary modulated signals at the ends of the SC-FDMA symbol duration more robust to errors, and improve transmission characteristics.

Here, radio transmission characteristics are determined, based on, for example, the presence/absence of encoding, the presence/absence of spreading and the presence/absence of repetition in primary modulation sections 120-1 and 120-2, and radio transmission characteristics are more robust when encoding, spreading or repetition is performed, compared to cases where encoding, spreading or repetition is not performed. Furthermore, even when encoding, spreading or repetition is performed, radio transmission characteristics vary depending on their methods, and, for example, when the coding rate, spreading factor or the number of repetitions is greater, more robust radio transmission characteristics are provided. Furthermore, even at the same encoding rate, the radio transmission characteristics vary depending on the encoding method, and the radio transmission characteristics are more robust when, for example, a turbo code is used compared to when, for example, a convolutional code is used. The same applies to the spreading method and repetition method, too.

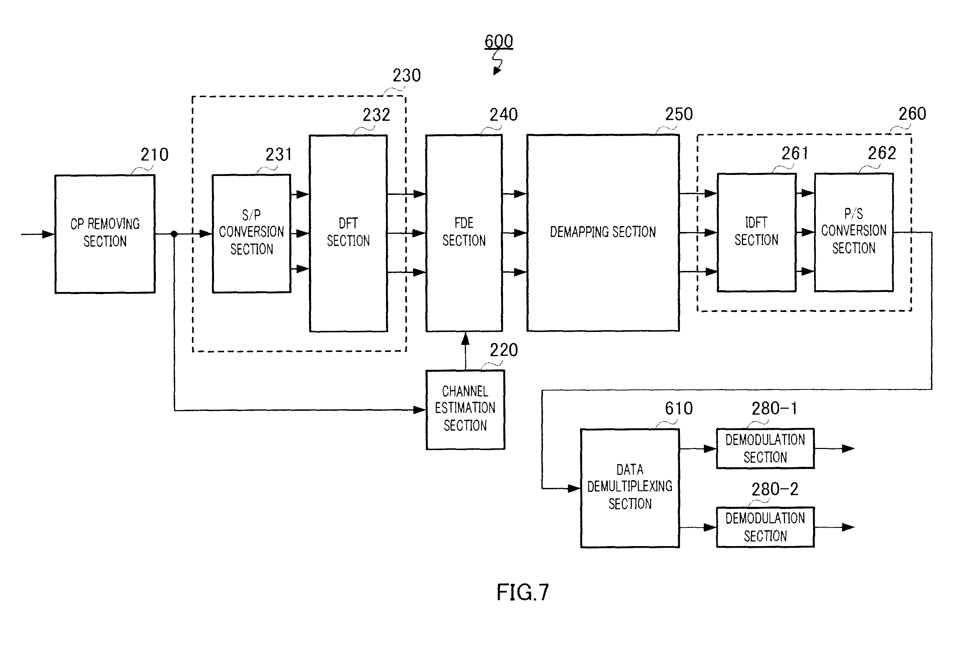

FIG.7 is a block diagram showing a configuration of main components of receiving apparatus 600 according to an embodiment of the present invention. In the explanations of the present embodiment, the same components as in FIG.3 will be assigned the same reference numerals and explanations thereof will be omitted.

The present embodiment is different from Embodiment 1 in that receiving apparatus 600 in FIG.7 eliminates combination section 290 and is provided with data demultiplexing section 610 instead of data demultiplexing section 270.

Data demultiplexing section 610 demultiplexes a time domain signal based on the order in which data rearrangement section 510 of transmitting apparatus 500 of the communicating party, rearranges primary modulated signals of different levels of error robustness and outputs the demultiplexed time domain signals to demodulation sections 280-1 and 280-2. To be more specific, data rearrangement section 510 of transmitting apparatus 500 arranges the primary modulated signal of the more robust radio transmission characteristics at the ends of the SC-FDMA symbol duration and arranges the primary modulated signal of the less robust radio transmission characteristics in the center of the SC-FDMA symbol duration, so that data demultiplexing section 610 demultiplexes the primary modulated signals arranged at the ends of the SC-FDMA symbol duration and outputs these primary modulated signals to corresponding demodulation section 280-1, and likewise demultiplexes the primary modulated signal arranged in the center of the SC-FDMA symbol duration and outputs this demultiplexed primary modulated signal to demodulation section 280-2.

As described above, according to the present embodiment, data rearrangement section 510 assigns signals of good radio transmission characteristics closer toward the ends of the SC-FDMA symbol duration. This enhances the error robustness at the ends of the SC-FDMA symbol duration susceptible to the influence of delayed waves, thereby reducing the influence of errors at symbol ends susceptible to the influence of delayed waves upon the entirety of packets and prevent overall throughput from deteriorating.

### (Embodiment 4)

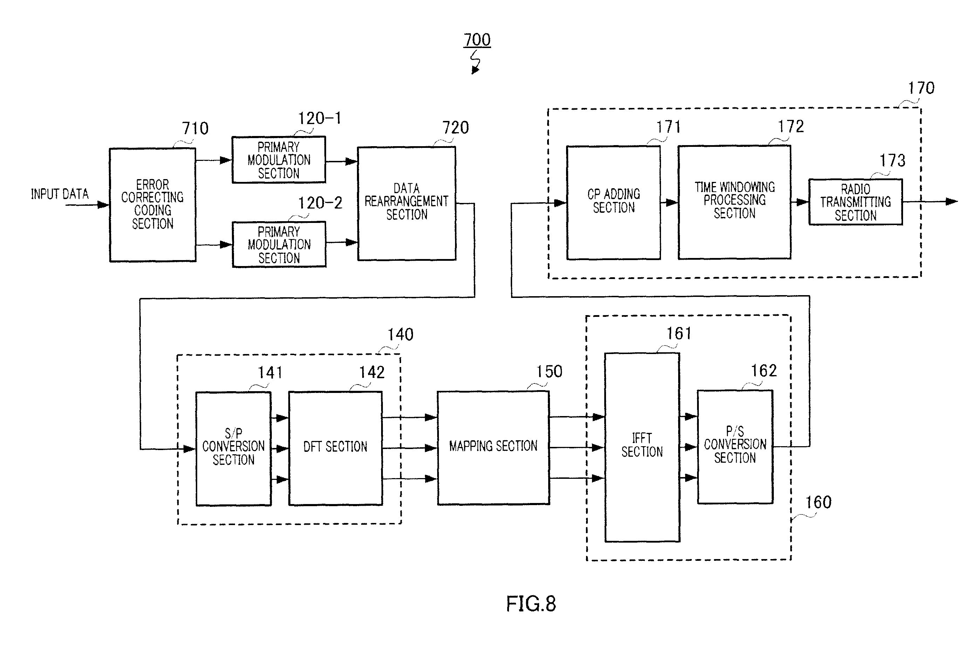

FIG.8 is a block diagram showing a configuration of main components of transmitting apparatus 700 according to an embodiment of the present invention. In the explanations of the present embodiment, the same components as in FIG.2 will be assigned the same reference numerals and explanations thereof will be omitted.

The present embodiment is different from Embodiment 1 in that transmitting apparatus 700 in FIG.8 eliminates selector section 110 and is provided with data rearrangement section 720 instead of data rearrangement section 130 and further provided with error correcting coding section 710.

Error correcting coding section 710 applies error correcting coding processing to input data and acquires systematic bits and parity bits. Error correcting coding section 710 outputs the acquired systematic bits to primary modulation section 120-1 and parity bits to primary modulation section 120-2.

Data rearrangement section 720 rearranges the primary modulated signals generated in primary modulation sections 120-1 and 120-2. To be more specific, data rearrangement section 720 preferentially maps the parity bits, which are redundant bits in error correcting coding, at the ends of the SC-FDMA symbol duration, and maps the systematic bits, which are information bits, to the center of the SC-FDMA symbol duration. By thus assigning the parity bits, which are redundant bits, to the ends of the SC-FDMA symbol duration, which are susceptible to the influence of delayed waves, and assigning the systematic bits, which are information bits, to the center of the SC-FDMA symbol duration, which is less susceptible to the influence of delayed waves, it is possible to make the systematic bits more robust to errors and improve transmission characteristics.

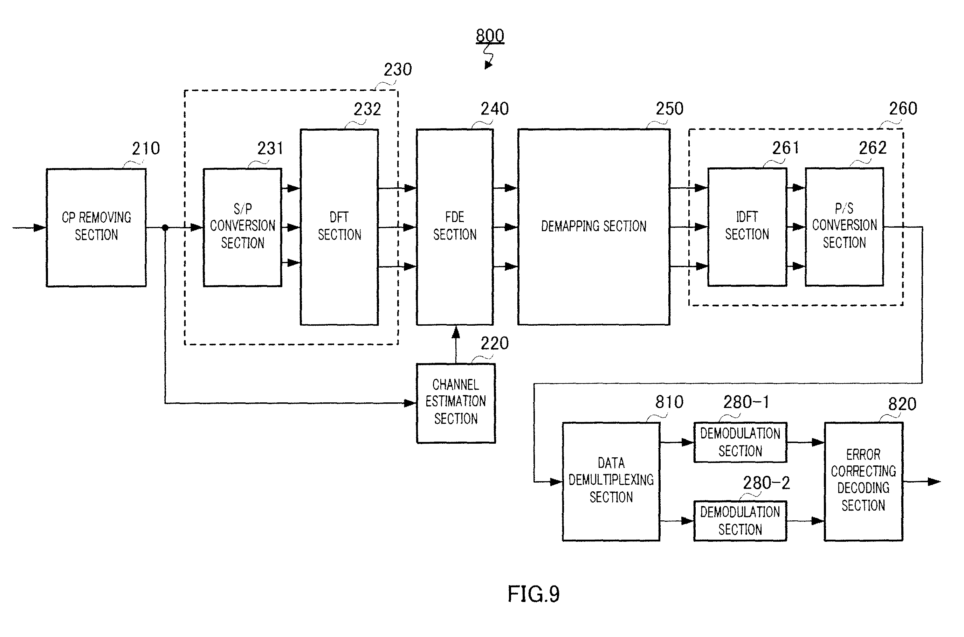

FIG.9 is a block diagram showing a configuration of main components of receiving apparatus 800 according to an embodiment of the present invention. In the explanations of the present embodiment, the same components as in FIG.3 will be assigned the same reference numerals and explanations thereof will be omitted.

The present embodiment is different from Embodiment 1 in that receiving apparatus 800 in FIG.9 eliminates combination section 290 and is provided with data demultiplexing section 810 instead of data demultiplexing section 270 and is further provided with error correcting decoding section 820.

Data demultiplexing section 810 demultiplexes a time domain signal based on the order in which data rearrangement section 720 of transmitting apparatus 700 of the communicating party rearranges a primary modulated signal, and outputs the demultiplexed primary modulated signals to corresponding demodulation sections 280-1 and 280-2. To be more specific, data rearrangement section 720 of transmitting apparatus 700 arranges the parity bits at the ends of the SC-FDMA symbol duration and arranges the systematic bits in the center of the SC-FDMA symbol duration, so that data demultiplexing section 810 demultiplexes the parity bits arranged at the ends of the SC-FDMA symbol duration and outputs these demultiplexed parity bits to corresponding demodulation section 280-1, and likewise demultiplexes the systematic bits arranged in the center of the SC-FDMA symbol duration and outputs these demultiplexed systematic bits to corresponding demodulation section 280-2.

Error correcting decoding section 820 applies error correcting decoding processing to the demodulated signals demodulated in demodulation sections 280-1 and 280-2 and acquires decoded data.

As described above, according to the present embodiment, data rearrangement section 720 assigns the parity bits generated by error correcting coding, closer toward the ends of the SC-FDMA symbol duration. Thus, by assigning parity bits, which are redundant bits, at the ends of the SC-FDMA symbol duration, which are susceptible to the influence of delayed waves, it is possible to make systematic bits more robust to errors and prevent overall throughput from deteriorating.

### (Embodiment 5)

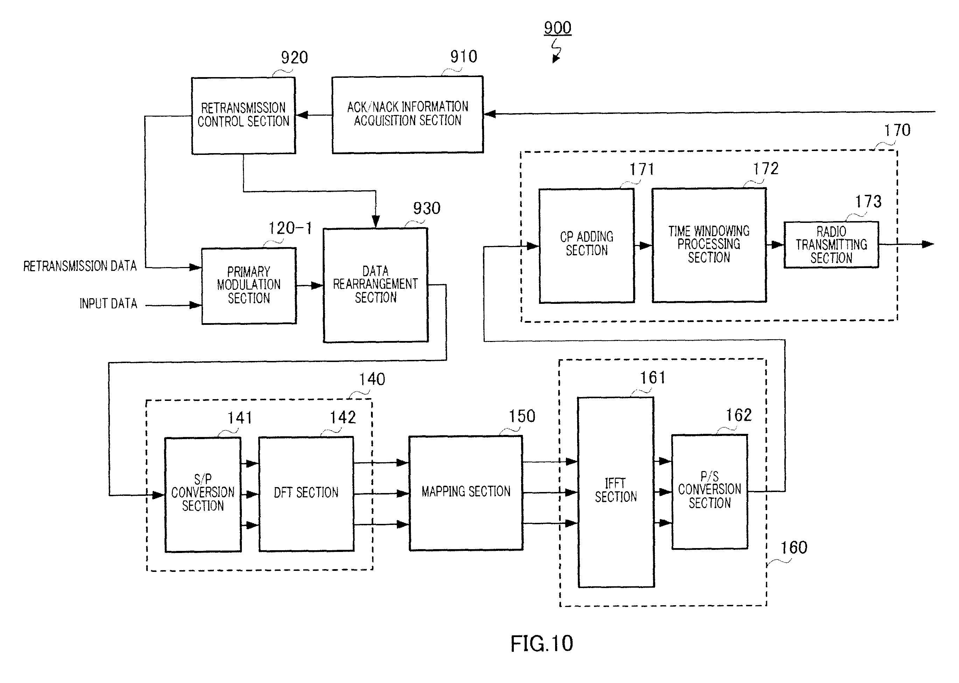

FIG.10 is a block diagram showing a configuration of main components of transmitting apparatus 900 according to an embodiment of the present invention. In the explanations of the present embodiment, the same components as in FIG.2 will be assigned the same reference numerals and explanations thereof will be omitted.

The present embodiment is different from Embodiment 1 in that transmitting apparatus 900 in FIG.10 eliminates selector section 110 and primary modulation section 120-2, is provided with data rearrangement section 930 instead of data rearrangement section 130 and is further provided with ACK/NACK (ACKnowledgment/Negative ACKnowledgment) information acquisition section 910 and retransmission control section 920.

ACK/NACK information acquisition section 910 acquires ACK/NACK information transmitted from the receiving apparatus of the communicating party, and outputs the acquisition result to retransmission control section 920.

When the acquisition result is NACK, retransmission control section 920 inputs retransmission data to primary modulation section 120-1 and outputs the acquisition result indicating ACK/NACK to data rearrangement section 930.

Data rearrangement section 930 changes the arrangement mode depending on whether the acquisition result is ACK or NACK, and generates a time domain signal. To be more specific, in the case of NACK, data rearrangement section 930 rearranges the primary modulated signals of retransmission data in a different order from new data. For example, data rearrangement section 930 rearranges data such that the primary modulated signal arranged in the center of the SC-FDMA symbol duration upon new data transmission is arranged at the ends of the SC-FDMA symbol duration and the primary modulated signal arranged at the ends of the SC-FDMA symbol duration upon new data transmission is arranged in the center of the SC-FDMA symbol duration.

Thus, the arrangement of primary modulated signals is changed between new data transmission and data retransmission such that the primary modulated signal that was arranged at the ends of an SC-FDMA symbol duration upon new data transmission and that has caused an error due to the influence of delayed waves is arranged in the center of the SC-FDMA symbol duration, which is less susceptible to the influence of delayed waves, upon data retransmission, thereby reducing the proportion of packets that cause an error upon new data transmission and that cause an error again upon data retransmission, and, as a result, preventing packets from causing a decoding error again and preventing overall throughout from deteriorating.

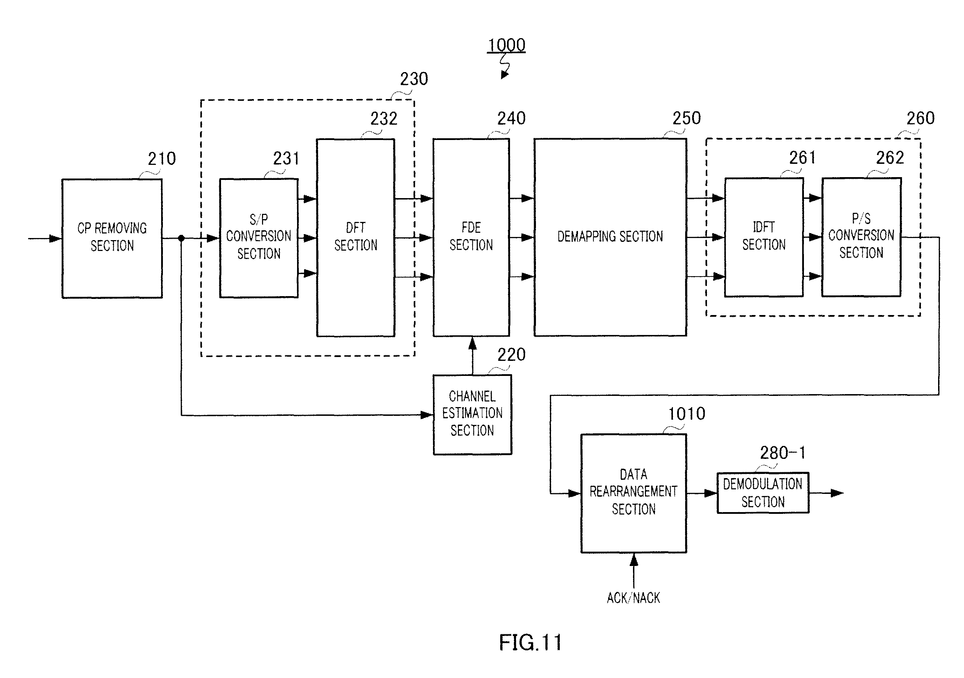

FIG. 11 is a block diagram showing a configuration of main components of receiving apparatus 1000 according to an embodiment of the present invention. In the explanations of the present embodiment, the same components as in FIG.3 will be assigned the same reference numerals and explanations thereof will be omitted.

The present embodiment is different from Embodiment 1 in that receiving apparatus 1000 in FIG.11 eliminates demodulation section 280-2 and combination section 290 and is provided with data rearrangement section 1010 instead of data demultiplexing section 270.

Data rearrangement section 1010 rearranges primary modulated signals based on rearrangement order in data rearrangement section 930 of transmitting apparatus 900 of the communicating party. To be more specific, data rearrangement section 1010 outputs primary modulated signals to demodulation section 280-1 without rearranging the primary modulated signals upon new data reception, whereas, upon retransmission data reception, data rearrangement section 1010 rearranges the primary modulated signals arranged at the ends of the SC-FDMA symbol duration to the center of the SC-FDMA symbol duration and rearranges the primary modulated signals arranged in the center of the SC-FDMA symbol duration to the ends of the SC-FDMA symbol duration. Data rearrangement section 1010 outputs the rearranged primary modulated signals to demodulation section 280-1.

As described above, according to the present embodiment, data rearrangement section 930 changes a signal assignment pattern in one SC-FDMA symbol duration between new data transmission and data retransmission. This makes it possible to rearrange the primary modulated signals arranged at the ends of the SC-FDMA symbol duration, which are susceptible to the influence of delayed waves, upon new data transmission in which an error has occurred, to the center of the SC-FDMA symbol duration less susceptible to the influence of delayed waves upon data retransmission, thereby preventing the same primary modulated signal from producing the same error and prevent overall throughput from deteriorating.

When primary modulated signals are rearranged in different orders between new data transmission and data retransmission, it is also possible to, for example, change the interleaving pattern per retransmission, apply a cyclic shift per retransmission and so on.

In the above embodiment, the pattern of rearrangement employed by the data rearrangement section of the transmitting apparatus may be a pattern known in advance between the transmitting apparatus and the receiving apparatus, or the rearrangement pattern may be determined based on the duration of delay of delayed waves and the determined rearrangement pattern may be reported as control information from the transmitting apparatus to the receiving apparatus (or from the receiving apparatus to the transmitting apparatus).

An aspect of the transmitting apparatus according to the present invention is a transmitting apparatus that transmits an SC-FDMA signal and adopts a configuration including a data rearrangement section that acquires a time domain signal by arranging signals showing good error performance or signals not requiring high error performance closer toward the ends of the symbol duration of the SC-FDMA signal, and a formation section that forms the SC-FDMA signal using the time domain signal acquired in the data rearrangement section.

According to this configuration, signals can be arranged by selecting between symbol ends in one symbol duration of the SC-FDMA signal, which are susceptible to the influence of delayed waves, and the symbol center, which is less susceptible to the influence of delayed waves, so that it is possible to reduce the influence of errors at symbol ends susceptible to the influence of delayed waves upon the entirety of packets and prevent overall throughput from deteriorating.

Another aspect of the transmitting apparatus of the present invention adopts a configuration in which a data rearrangement section assigns signals having lower M-ary modulation valued closer toward the ends of the symbol duration of the SC-FDMA signal.

According to this configuration, error robustness at symbol ends susceptible to the influence of delayed waves is improved, so that it is possible to reduce the influence of errors at symbol ends susceptible to the influence of delayed waves upon the entirety of packets and prevent overall throughput from deteriorating.

A further aspect of the transmitting apparatus according to the present invention adopts a configuration in which a data rearrangement section assigns signals requiring lower quality closer toward the ends of the symbol duration of the SC-FDMA signal.

According to this configuration, even when errors occur at symbol ends susceptible to the influence of delayed waves, it is possible to minimize the influence of errors at symbol ends susceptible to the influence of delayed waves upon overall packet quality.

A still further aspect of the transmitting apparatus according to the present invention adopts a configuration in which a data rearrangement section assigns signals having robust radio transmission characteristics closer toward the ends of the symbol duration of the SC-FDMA signal.

According to this configuration, error robustness at symbol ends susceptible to the influence of delayed waves is improved, so that it is possible to reduce the influence of errors at symbol ends susceptible to the influence of delayed waves upon the entirety of packets, and prevent overall throughput from deteriorating.

A still further aspect of the transmitting apparatus according to the present invention adopts a configuration in which a data rearrangement section assigns parity bits generated by error correcting coding closer toward the ends of the symbol duration of the SC-FDMA signal.

According to this configuration, it is possible to reduce the proportion of systematic bits to cause errors, and prevent overall throughput from deteriorating.

A still further aspect of the transmitting apparatus according to the present invention adopts a configuration in which a data rearrangement section changes the rearrangement pattern depending on whether input data is new data or retransmission data.

According to this configuration, a signal which is arranged at symbol ends susceptible to the influence of delayed waves upon new data transmission and which has caused an error, can be arranged, upon data retransmission, to the center of the symbol less susceptible to the influence of delayed waves, thereby preventing the same signal from causing an error again and preventing overall throughput from deteriorating.

A still further aspect of the transmitting apparatus according to the present invention adopts a configuration in which a data rearrangement section determines the rearrangement pattern based on the duration of delay of delayed waves.

According to this configuration, when the duration of delay is greater, it is possible to make bigger the area at the ends of the SC-FDMA symbols duration where signals of good error performance or signals not requiring high quality are arranged, so that it is possible to prevent the influence of delayed waves as much as possible.

A still further aspect of the transmitting apparatus according to the present invention adopts a configuration further including a reporting section that reports the rearrangement pattern in the data rearrangement section to the communicating party.

According to this configuration, even when the rearrangement pattern is changed, the receiving side can control rearrangement patterns in a reliable manner, so that it is possible to correctly perform demodulation using suitable demodulation schemes.

A still further aspect of the transmitting apparatus according to the present invention adopts a configuration in which a rearrangement pattern in a data rearrangement section is a pattern that is known in advance between the communicating party and the transmitting apparatus.

According to this configuration, control information related to rearrangement patterns needs not be transmitted or received, so that transmission efficiency can be improved.

A still further aspect of the transmitting apparatus according to the present invention adopts a configuration further including an acquisition section that acquires the rearrangement pattern in a data rearrangement section reported from the communicating party.

According to this configuration, the rearrangement pattern can be changed according to the reception environment of the communicating party, so that communication quality can be improved.

An aspect of the receiving apparatus according to the present invention adopts a configuration including a receiving section that receives an SC-FDMA signal of a radio frequency band, a conversion section that converts the SC-FDMA signal to a baseband time domain signal, and a demodulation section that demodulates the baseband time domain signal acquired in the conversion section, into a signal of good error performance, closer toward the ends of the symbol duration of the SC-FDMA signal.

According to this configuration, at the transmitting side, signals showing good error performance are arranged closer toward symbol ends in one symbol duration of the SC-FDMA signal, which are susceptible to the influence of delayed waves, so that, at the receiving end, it is possible to reduce the influence of errors at symbol ends susceptible to the influence of delayed waves upon the entirety of packets, and, as a result, preventing overall throughput from deteriorating.

Another aspect of the receiving apparatus according to the present invention adopts a configuration in which a demodulation section demodulates signals closer to the ends of the symbol duration of an SC-FDMA signal using demodulation schemes of lower M-ary modulation values.

According to this configuration, at the transmitting end, signals of lower M-ary modulation values are arranged closer toward symbol ends, which are susceptible to the influence of delayed waves, so that, at the receiving side, it is possible to improve error robustness at symbol ends susceptible to the influence of delayed waves, reduce the influence of errors at symbol end susceptible to the influence of delayed waves upon the entirety of packets, and prevent overall throughput from deteriorating.

A further aspect of the receiving apparatus according to the present invention adopts a configuration in which a demodulation section demodulates signals closer to the ends of the symbol duration of the SC-FDMA signal into signals modulated using an error correcting coding method, spreading method or repetition method having robust radio transmission characteristics.

According to this configuration, at the transmitting side, signals modulated using an error correcting coding method, spreading method or repetition method of robust radio transmission characteristics are arranged closer toward symbol ends, which are susceptible to the influence of delayed waves, so that, on the receiving side, it is possible to improve error robustness at symbol ends susceptible to the influence of delayed waves, reduce the influence of errors at symbol ends susceptible to the influence of delayed waves upon the entirety of packets, and prevent overall throughput from deteriorating.

### Industrial Applicability

The present invention can reduce the influence of delayed waves without changing (increasing) the CP duration and prevent overall throughput from decreasing, and therefore is suitable for use in a transmitting apparatus, transmission method, receiving apparatus and reception method or the like used in a single carrier communication scheme.

## Claims

1. A transmitting apparatus that transmits a single carrier frequency division multiple access signal, the apparatus comprising:
a data rearrangement section that acquires a time domain signal by arranging signals showing good error performance or signals not requiring high error performance closer toward ends of a symbol duration of the single carrier frequency division multiple access signal; and
a formation section that forms the single carrier frequency division multiple access signal using the time domain signal acquired in the data rearrangement section.

2. The transmitting apparatus according to claim 1, wherein the data rearrangement section assigns signals of lower M-ary modulation values closer toward the ends of the symbol duration of the single carrier frequency division multiple access signal.

3. The transmitting apparatus according to claim 1, wherein the data rearrangement section assigns signals of lower quality requirement closer toward the ends of the symbol duration of the single carrier frequency division multiple access signal.

4. The transmitting apparatus according to claim 1, wherein the data rearrangement section assigns signals of more robust radio transmission characteristics closer toward the ends of the symbol duration of the single carrier frequency division multiple access signal.

5. The transmitting apparatus according to claim 1, wherein the data rearrangement section assigns parity bits generated by error correcting coding closer toward the ends of the symbol duration of the single carrier frequency division multiple access signal.

6. The transmitting apparatus according to claim 1, wherein the data rearrangement section changes a rearrangement pattern depending on whether input data is new data or retransmission data.

7. The transmitting apparatus according to claim 1, wherein the data rearrangement section determines a rearrangement pattern based on a duration of delay of a delayed wave.

8. The transmitting apparatus according to claim 1, further comprising a reporting section that reports a rearrangement pattern in the data rearrangement section to a communicating party.

9. The transmitting apparatus according to claim 1, wherein a rearrangement pattern in the data rearrangement section is a pattern that is known in advance between a communicating party and the transmitting apparatus.

10. The transmitting apparatus according to claim 1, further comprising an acquisition section that acquires a rearrangement pattern in the data rearrangement section reported from the communicating party.

11. A receiving apparatus comprising:
a receiving section that receives a single carrier frequency division multiple access signal of a radio frequency band;
a conversion section that converts the single carrier frequency division multiple access signal to a baseband time domain signal; and
a demodulation section that demodulates the baseband time domain signal acquired in the conversion section into a signal in which error performance improves higher toward ends of a symbol duration of the single carrier frequency division multiple access signal.

12. The receiving apparatus according to claim 11, wherein the demodulation section demodulates symbols closer to the ends of the symbol duration of the single carrier frequency division multiple access signal using demodulation schemes of lower M-ary modulation values.

13. The receiving apparatus according to claim 11, wherein the demodulation section demodulates signals closer to the ends of the symbol duration of the single carrier frequency division multiple access signal into a signal modulated using an error correcting coding method, a spreading method or a repetition method of more robust radio transmission characteristics.

14. A transmission method for transmitting a single carrier frequency division multiple access signal, comprising the steps of:
acquiring a time domain signal by arranging signals showing good error performance or signals not requiring high error performance closer toward ends of a symbol duration of the single carrier frequency division multiple access signal; and
forming the single carrier frequency division multiple access signal using the time domain signal acquired by the data rearrangement section.

15. A reception method comprising the steps of:
receiving a single carrier frequency division multiple access signal of a radio frequency band;
converting the single carrier frequency division multiple access signal to a baseband time domain signal; and
demodulating the baseband time domain signal acquired into a signal in which error performance improves higher toward ends of a symbol duration of the single carrier frequency division multiple access signal.
